# EUROPÄISCHE PATENTSCHRIFT

(11) **EP 3 493 887 B1**
(45) Veröffentlichungstag und Bekanntmachung des Hinweises auf die Patenterteilung: **03.06.2020**
(21) Anmeldenummer: 16756608.2
(22) Anmeldetag: 04.08.2016
(51) Int. Cl.: B01D 1/22, B01D 5/00, C08L 83/04

(54) **ENTFLÜCHTIGUNG VON HOCHVISKOSEN SILICONFLÜSSIGKEITEN IM KURZWEGVERDAMPFER**
DEVOLATILIZATION OF HIGHLY VISCOUS SILICONE FLUIDS IN THE SHORT PATH EVAPORATOR
DEVOLATILISATION DE LIQUIDES DE SILICONE À HAUTE VISCOSITÉ DANS UN ÉVAPORATEUR COURT TRAJET

(43) Veröffentlichungstag der Anmeldung: 12.06.2019
(73) Patentinhaber: Wacker Chemie AG, 81737 München (DE)
(72) Erfinder: BECKER, Nils, 84489 Burghausen (DE); BECHER, Dominik, 84533 Haiming (DE); FUERST, Josef, 84561 Mehring (DE); SCHUSTER, Johann, 84547 Emmerting (DE)
(74) Vertreter: Fritz, Helmut
(86) Internationale Anmeldenummer: PCT/EP2016/068650
(87) Internationale Veröffentlichungsnummer: WO 2018/024334

(56) Entgegenhaltungen:
- EP-A1- 2 206 737
- WO-A1-2010/003770
- DE-A1- 10 227 590
- DE-A1-102012 015 723
- DE-C- 950 397
- US-A- 3 054 444
- US-A1- 2015 038 736

## Beschreibung

Die Erfindung betrifft ein Verfahren zur Entfernung von flüchtigen Bestandteilen aus hochviskosen Siliconflüssigkeiten in einem Kurzwegverdampfer.

Siliconhersteller stellen vernetzbare Polymerzusammensetzungen her, beispielsweise bei Raumtemperatur mit Feuchtigkeit vernetzende Siliconzusammensetzungen (RTV). Diese bestehen im Wesentlichen aus einem oder mehreren Polydimethylsiloxan, Füllstoffen und anderen Additiven. Beim Compoundierungsprozess selbst entstehen unerwünschte Nebenprodukte, wie niedermolekulare, cyclische, lineare sowie verzweigten Siloxane. Diese finden sich als flüchtige Komponente im späteren vulkanisierten Endprodukt des Verarbeiters wieder. Aufgrund stetig steigender Qualitätsanforderungen, nicht zuletzt im Health- und Babycare-Segment, regelt u.a. eine BfR-Norm den Gehalt an flüchtigen Bestandteilen im Endprodukt (<=0,5 % nach 4h tempern bei 200°C). Zur Einhaltung des Grenzwertes ist in der Praxis zumeist ein Ausheizschritt des vulkanisierten Endproduktes notwendig. Dieser stellt einen zusätzlichen zeit- und kostenrelevanten Prozessschritt beim Verarbeiter dar.

Gegenstand der Erfindung ist ein Verfahren zur Entfernung von flüchtigen Bestandteilen aus hochviskosen Siliconpolymeren oder Siliconzusammensetzungen in einem Kurzwegverdampfer gemäß Anspruch 1.

Im vorliegenden Verfahren werden die hochviskosen Siliconpolymere oder Siliconzusammensetzungen bereits vor der Vernetzung von flüchtigen Bestandteilen befreit. Die Entfernung von flüchtigen Bestandteilen aus den noch nicht vulkanisierten Siliconpolymeren oder Siliconzusammensetzungen ist wesentlich wirtschaftlicher und umweltfreundlicher und führt zu vulkanisierten Endprodukten mit sehr geringem Gehalt an flüchtigen Bestandteilen. Der Ausheizschritt des vulkanisierten Endproduktes kann entfallen DE102012015723A1 und WO2010/003770A1 offenbaren ein Verfahren zur Entfernung von flüchtigen Bestandteilen aus hochviskosen Siliconflüssigkeiten.

Der Kurzwegverdampfer ist beispielsweise beschrieben in DE1444326A. Er umfasst einen vertikal angeordneten Zylinder mit einem Heizmantel, der die Innenwand des Zylinders beheizt, einen Rotor und einen innenliegenden Kondensator. Auf der Rotortrageeinrichtung sind Wischer- und Förderelemente angebracht.

Die Siliconpolymere oder Siliconzusammensetzungen werden durch eine Zuführung am Kopf des Zylinders an der Innenwand eingespeist. Die Wischer- und Förderelemente der Rotortrageinrichtung bewirken eine dünnschichtige Verteilung der Siliconpoymere oder Siliconzusammensetzung auf der beheizten Innenwand. Dabei verdampfen flüchtige Bestandteile. Durch die schneckenförmig gestalteten Förderelemente kommt es zu einer Zwangsförderung in Richtung der am Boden des Apparates liegenden Austragseinrichtung. Der Rotor wird üblicherweise in einem Drehzahlbereich von 0,1 - 100 rpm; bevorzugt 0,3 - 30 rpm; besonders bevorzugt 1 - 26 rpm betrieben.

Ein Teil der flüchtigen Bestandteile wird an einem innen im Zylinder liegenden Kondensator kondensiert. Der nichtverdampfte Anteil der Siliconpolymere oder Siliconzusammensetzung erreicht den unteren Bereich des Kurzwegverdampfers und verlässt diesen über den Produktaustritt. Die nicht kondensierten flüchtigen Bestandteile und gegebenenfalls Gase gelangen durch den Vakuumstutzen und gegebenenfalls über eine Kühlfalle in das Vakuumsystem.

Die Viskosität der hochviskosen Siliconpolymere beträgt 1000 bis 20000 Pa*s, bevorzugt 5000 bis 12000 Pa*s. Die Viskosität der hochviskosen Siliconzusammensetzungen beträgt 100 bis 20000 Pa*s, bevorzugt 400 bis 12000 Pa*s, jeweils gemessen bei 25 °C und Scherfaktor D=1.

Die hochviskosen Siliconzusammensetzungen enthalten vorzugsweise mindestens 50 Gew.-%, besonders bevorzugt mindestens 70 Gew.-%, insbesondere mindestens 90 Gew.-% Siliconpolymer.

Das Siliconpolymer enthält beispielsweise keine funktionellen Gruppen, wie bei Siliconölen oder ist beispielsweise kondensationsfähige Endgruppen aufweisendes Grundpolymer wie für RTV-1- oder RTV-2 Massen oder ist beispielsweise ungesättigte Alkylgruppen aufweisendes Grundpolymer beispielsweise für LSR- oder HTV-Massen, Si-H funktionelles, Si-Vinyl, phenylhaltiges oder flourhaltiges Grundpolymer. Es kann eine Art von Siliconpolymer oder ein Gemisch aus mindestens zwei Arten von Siliconpolymeren eingesetzt werden.

Hochviskose Siliconzusammensetzungen sind beispielsweise RTV-1-, RTV-2- oder LSR-Massen.
Neben Siliconpolymer enthalten die hochviskosen Siliconzusammensetzungen vorzugsweise Füllstoffe. Als Füllstoffe bevorzugt sind Kieselsäuren, insbesondere durch Fällung oder pyrogen hergestellte Kieselsäuren.

Vorzugsweise weisen die Kieselsäuren eine spezifische BET-Oberfläche von 30 bis 500 m²/g, bevorzugt 100 bis 300 m²/g, auf. Die BET-Oberfläche wird nach bekannten Verfahren gemessen, in einer bevorzugten Ausführung wird die spezifische Oberfläche als BET-Oberfläche mittels Stickstoff BET-N₂ bei der Siedetemperatur des flüssigen Stickstoffs gemessen, bevorzugt gemäß Deutscher Industrie Norm DIN 66131 und DIN 66132.

Die hochviskosen Siliconzusammensetzungen können weitere Füllstoffe entweder zusätzlich zu Kieselsäuren oder anstatt Kieselsäuren enthalten. Beispiele für weitere Füllstoffe sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Talkum, Kaolin, Siliciumnitrid, Siliciumcarbid, Bornitrid, Glas- und Kunststoffpulver, wie Polyacrylnitrilpulver; und verstärkende Füllstoffe, also Füllstoffe mit einer BET-Oberfläche von mehr als 50 m²/g, wie Ruße, beispielsweise Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder durch Veretherung von Hydroxylgruppen zu Alkoxygruppen.
Bei Einsatz abrasiver Füllstoffe sind insbesondere die auf der Rotortrageeinrichtung angebrachten Wischer- und Förderelemente in gepanzerter Ausführung vorzusehen.

Die hochviskosen Siliconzusammensetzungen enthalten vorzugsweise pro 100 Gewichtsteile Organopolysiloxan 10 bis 200 Gewichtsteile, besonders bevorzugt 30 bis 150 Gewichtsteile, insbesondere 50 bis 120 Gewichtsteile Füllstoff.

Die hochviskosen Siliconzusammensetzungen können zusätzlich zu Siliconpolymer und Füllstoff weitere Stoffe enthalten. Bevorzugte Beispiele für weitere Stoffe sind Weichmacher, Katalysatoren, Fungizide, Haftvermittler, Rheologieadditive und Pigmente und deren Mischungen.

Die flüchtigen Bestandteile sind vorzugsweise niedermolekulare cyclische Siloxane, wie D3 bis D30, insbesondere D4 bis D18, lineare Siloxane mit 2 bis 30 Siliciumatomen, insbesondere 3 bis 18 Siliciumatomen und Spuren an Wässer.

Die hochviskosen Siliconzusammensetzungen sind vernetzende Siliconzusammensetzungen (RTV) oder Flüssigsilicone (LSR), die additions-, kondensations- oder peroxidischvernetzend sein können.

Der Absolutdruck im Kurzwegverdampfer beträgt im Verfahren vorzugsweise 0,01 Pa bis 500 Pa, besonders bevorzugt 0,2 Pa bis 10 Pa, insbesondere 0,5 Pa bis 5 Pa.

Die Temperatur der hochviskosen Siliconzusammensetzungen im Kurzwegverdampfer (Betriebstemperatur), vorzugsweise gemessen an der Innenwand des Zylinders, beträgt im Verfahren vorzugsweise 150°C bis 240°C, besonders bevorzugt 180°C bis 230°C, insbesondere 200°C bis 220°C.

Vorzugsweise werden die hochviskosen Siliconpolymere oder Siliconzusammensetzungen vor der Einspeisung in den Kurzwegverdampfer erhitzt. Vorzugsweise werden die hochviskosen Siliconpolymere oder Siliconzusammensetzungen mit Hilfe eines Dynamikmischers über Eintrag von Scherenergie erhitzt. Vorzugsweise werden die hochviskosen Siliconpolymere oder Siliconzusammensetzungen durch das Erhitzen auf Betriebstemperatur gebracht. Vorzugsweise erfolgt eine Entgasung der Siliconpolymere oder Siliconzusammensetzungen vor Eintritt in den Kurzwegverdampfer, besonders bevorzugt mit Hilfe einer Flashbox.

Die Beschickung des Kurzwegverdampfers erfolgt vorzugsweise aus Gebinden, bevorzugt aufgegeben über Trichter mit angeschlossener Verdrängerpumpe, insbesondere aus Fässern mit Pumpen, insbesondere Schöpfkolbenpumpen. Besonders bevorzugt erfolgt die Beschickung direkt aus dem vorgeschalteten Herstellungsprozess der Siliconpolymere oder Siliconzusammensetzung.

Vorzugsweise werden die von flüchtigen Bestandteilen befreiten hochviskosen Siliconpolymere oder Siliconzusammensetzungen aus dem Kurzwegverdampfer über einen konischen Austrag mit Hilfe einer standgeregelten Verdrängerpumpe ausgetragen, insbesondere mit Hilfe von Zahnradpumpen.

Vorzugsweise werden die aus dem Kurzwegverdampfer ausgetragenen hochviskosen Siliconpolymere oder Siliconzusammensetzungen mit Hilfe eines dynamischen oder statischen Wärmetauschers auf Raumtemperatur abgekühlt, insbesondere mit Hilfe eines statischen Wärmetauschers.

Vorzugsweise werden die von flüchtigen Bestandteilen befreiten hochviskosen Siliconpolymere oder Siliconzusammensetzungen in Lagergebinde, vorzugsweise mobile Lagergebinde, wie Fässer abgefüllt. Besonders bevorzugt werden die von flüchtigen Bestandteilen befreiten hochviskosen Siliconpolymere oder Siliconzusammensetzungen direkt weiterverarbeitet.

Vorzugsweise erfolgt der Austrag der am innen liegenden Kondensator auskondensierten flüchtigen Bestandteile über einen freien Überlauf mit Vakuumsperre.

Die Viskositätsangaben der Organopolysiloxane und der hochviskosen Siliconzusammensetzungen beruhen vorzugsweise auf der Messung nach DIN 54458 mit Hilfe des Amplitudensweeps. Gemessen wird über Platte-Platte mit einem Kegel mit 25mm Durchmesser und 0,5 mm Abstand bei einer Kreisfrequenz von 10Hz. Angegeben sind die Viskositäten η*(γ=100%): entspricht dem komplexen Viskositätswert [mPa*s] bei einer Deformation von 100% gemäß DIN 54458.

Die Viskositätsangaben der Siliconöle und Siliconpolymere beruhen vorzugweise auf der Messung nach DIN 53019/DIN EN ISO 3219.

Die Summe aller Bestandteile der hochviskosen Siliconzusammensetzungen ergeben 100 Gew.-%.

### Beispiele

### Beispiel 1 Entfernung von flüchtigen Bestandteilen aus einem Siliconpolymer

Beschrieben wird die Entfernung von flüchtigen Bestandteilen (Summenparameter D4-D18) aus einem Siliconpolymer (Polydimethylsiloxan mit Vinylgruppen) mit einer Viskosität von 10.000 Pas.

Durch Behandlung mittels Kurzwegverdampfer ist eine Reduzierung von flüchtigen Bestandteilen (Summenparameter D4-D18) von 1,3 auf 0,3% möglich. Es wird ein BfR-Wert von 0,32 in dem entflüchtigten Siliconpolymer erreicht.

Das Siliconpolymer kommt direkt aus der produzierenden Anlage (Polymerreaktor in dem die Polykondensation stattfindet) und wird dem Kurzwegverdampfer über eine Zahnradpumpe zugeführt. Hierbei passiert das Siliconpolymer einen Rotor-Stator-Dynamikmischer, der durch Eintrag von Scherenergie das Siliconpolymer auf die zur Entflüchtigung notwendige Temperatur von ca. 210°C aufheizt.

Das Siliconpolymer tritt am Kopf des Kurzwegverdampfers ein. Dieser wird bei ca. 207°C und einem Absolutdruck von 3 Pa betrieben. Die Rotortrageinrichtung des Kurzwegverdampfers dreht sich mit einer Geschwindigkeit von etwa 7 min⁻¹. Die Wischer- und Förderelemente der Rotortrageinrichtung bewirken eine dünnschichtige Verteilung des Siliconpolymers auf der beheizten Innenwand. Dabei verdampfen flüchtige Bestandteile. Durch die schneckenförmig gestalteten Förderelemente kommt es zu einer Zwangsförderung in Richtung der am Boden des Apparates liegenden Austragseinrichtung.

Flüchtige, kondensierbare Bestandteile werden am innenliegenden Kondensator auskondensiert und verlassen den Apparat über einen freien Überlauf mit Vakuumsperre.

Der Austrag des entflüchtigten Siliconpolymers erfolgt mit Hilfe einer standgeregelten Zahnradpumpe am konischen Boden des Kurzwegverdampfers. Vor der Abfüllung in Fässer wird das Siliconpolymer mit Hilfe eines statischen Plattenwärmetauschers auf ca. 80°C abgekühlt.

### Beispiel 2 Entfernung von flüchtigen Bestandteilen aus einer Siliconzusammensetzung

Beschrieben wird die Entfernung von flüchtigen Bestandteilen (Summenparameter D4-D18) aus einer Siliconzusammensetzung (Polydimethylsiloxan mit Vinylgruppen und ca. 40 wt.-% Hilfsstoff Kieselsäure) mit einer Viskosität von >1.000 Pas.

Durch Behandlung mittels Kurzwegverdampfer ist eine Reduzierung von flüchtigen Bestandteilen (Summenparameter D4-D18) um 80% möglich. Es wird ein BfR-Wert von 0,259 in der entflüchtigten Siliconzusammensetzung erreicht (gegenüber einem BfR-Wert von 0,966 in der nicht entflüchtigten Siliconzusammensetzung).

Die Siliconzusammensetzung wird in Fässern angeliefert und mit Hilfe von Schöpfkolbenpumpen dem Kurzwegverdampfer zugeführt. Hierbei passiert die Siliconzusammensetzung einen Rotor-Stator-Dynamikmischer, der durch Eintrag von Scherenergie die Siliconzusammensetzung auf die zur Entflüchtigung notwendige Temperatur von ca. 210°C aufheizt.

Die Siliconzusammensetzung tritt am Kopf des Kurzwegverdampfers ein. Dieser wird bei ca. 207°C und einem Absolutdruck von 3 Pa betrieben. Die Rotortrageinrichtung des Kurzwegverdampfers dreht sich mit einer Geschwindigkeit von etwa 23 min⁻¹. Die Wischer- und Förderelemente der Rotortrageinrichtung bewirken eine dünnschichtige Verteilung der Siliconzusammensetzung auf der beheizten Innenwand. Dabei verdampfen flüchtige Bestandteile. Durch die schneckenförmig gestalteten Förderelemente kommt es zu einer Zwangsförderung in Richtung der am Boden des Apparates liegenden Austragseinrichtung. Flüchtige, kondensierbare Bestandteile werden am innenliegenden Kondensator auskondensiert und verlassen den Apparat über einen freien Überlauf mit Vakuumsperre.

Der Austrag der entflüchtigten Siliconzusammensetzung erfolgt mit Hilfe einer standgeregelten Zahnradpumpe am konischen Boden des Kurzwegverdampfers. Vor der Abfüllung in Fässer wird die Siliconzusammensetzung mit Hilfe eines statischen Plattenwärmetauschers auf Raumtemperatur abgekühlt.

## Patentansprüche

1. Verfahren zur Entfernung von flüchtigen Bestandteilen aus hochviskosen Siliconpolymeren oder Siliconzusammensetzungen, bei dem die Viskosität der Siliconpolymeren 1000 bis 20000 Pa*s oder die Viskosität der Siliconzusammensetzungen 100 bis 20000 Pa*s beträgt, jeweils gemessen bei 25 °C und Scherfaktor D=1,
in einem Kurzwegverdampfer, der einen vertikal angeordneten Zylinder mit einem Heizmantel, der die Innenwand des Zylinders beheizt, einen Rotor und einen innenliegenden Kondensator umfasst, wobei auf der Rotortrageeinrichtung Wischer- und Förderelemente angebracht sind, welche eine dünnschichtige Verteilung der Siliconpolymere oder Siliconzusammensetzung bewirken und wobei auf der beheizten Innenwand die Siliconpolymere oder Siliconzusammensetzungen durch eine Zuführung am Kopf des Zylinders an der Innenwand eingespeist werden.

2. Verfahren nach einem oder mehreren der vorangehenden Ansprüche, bei dem das Siliconpolymer ausgewählt wird aus keine funktionellen Gruppen enthaltenden Siliconpolymeren, kondensationsfähige Endgruppen aufweisenden Grundpolymeren und ungesättigte Alkylgruppen aufweisenden Grundpolymeren sowie Si-H, Si-Vinyl, phenylhaltigen oder flourhaltigen Grundpolymeren.

3. Verfahren nach einem oder mehreren der vorangehenden Ansprüche, bei dem die hochviskosen Siliconzusammensetzungen mindestens 40 Gew.-% Organopolysiloxan enthalten.

4. Verfahren nach einem oder mehreren der vorangehenden Ansprüche, bei dem die hochviskosen Siliconzusammensetzungen Füllstoffe enthalten.

5. Verfahren nach einem oder mehreren der vorangehenden Ansprüche, bei dem der Absolutdruck im Kurzwegverdampfer 0,01 Pa bis 500 Pa beträgt.

6. Verfahren nach einem oder mehreren der vorangehenden Ansprüche, bei dem die Temperatur der hochviskosen Siliconpolymere oder Siliconzusammensetzungen im Kurzwegverdampfer 150°C bis 240°C beträgt.

7. Verfahren nach einem oder mehreren der vorangehenden Ansprüche, bei dem die hochviskosen Siliconpolymere oder Siliconzusammensetzungen vor der Einspeisung in den Kurzwegverdampfer erhitzt werden.

8. Verfahren nach einem oder mehreren der vorangehenden Ansprüche, bei dem die Siliconpolymere oder Siliconzusammensetzungen vor Eintritt in den Kurzwegverdampfer entgast werden.

## Claims

1. Method for removing volatile constituents from high-viscosity silicone polymers or silicone compositions, wherein the viscosity of the silicone polymers is 1000 to 20000 Pa*s or the viscosity of the silicone compositions is 100 to 20000 Pa*s, in each case measured at 25°C and shear factor D = 1,
in a short path evaporator which comprises a vertically disposed cylinder having a heating jacket which heats the inner wall of the cylinder; a rotor; and an internal condenser, with wiper elements and conveying elements mounted on the rotor-carrying facility and bringing about distribution of the silicone polymers or silicone composition in the form of a thin layer, and where, on the heated inner wall, the silicone polymers or silicone compositions are fed by a feed at the top of the cylinder on the inner wall.

2. Method according to one or more of the preceding claims, wherein the silicone polymer is selected from silicone polymers containing no functional groups, base polymers having condensable end groups, and base polymers having unsaturated alkyl groups, and also Si-H, Si-vinyl, phenyl-containing or fluorine-containing base polymers.

3. Method according to one or more of the preceding claims, wherein the high-viscosity silicone compositions contain at least 40 wt% of organopolysiloxane.

4. Method according to one or more of the preceding claims, wherein the high-viscosity silicone compositions comprise fillers.

5. Method according to one or more of the preceding claims, wherein the absolute pressure in the short path evaporator is 0.01 Pa to 500 Pa.

6. Method according to one or more of the preceding claims, wherein the temperature of the high-viscosity silicone polymers or silicone compositions in the short path of the evaporator is 150°C to 240°C.

7. Method according to one or more the preceding claims, wherein the high-viscosity silicone polymers or silicone compositions are heated before being fed into the short path evaporator.

8. Method according to one or more the preceding claims, wherein the silicone polymers or silicone compositions are degassed before entry into the short path evaporator.

## Revendications

1. Procédé pour éliminer les constituants volatils de polymères de silicone hautement visqueux ou de compositions de silicone hautement visqueuses, dans lequel la viscosité des polymères de silicone est de 1000 à 20.000 Pa.s ou la viscosité des compositions de silicone est de 100 à 20.000 Pa.s, à chaque fois mesurée à 25°C et à un facteur de cisaillement D = 1, dans un évaporateur instantané, qui comprend un cylindre disposé verticalement pourvu d'une chemise chauffante qui chauffe la paroi interne du cylindre, un rotor et un condensateur interne, des éléments de raclage et de transport étant disposés sur le dispositif support du rotor, qui provoquent une répartition en couche mince des polymères de silicone ou de la composition de silicone et les polymères de silicone ou les compositions de silicone étant injecté(e)s via une alimentation en tête du cylindre au niveau de la paroi interne.

2. Procédé selon l'une ou plusieurs des revendications précédentes, dans lequel le polymère de silicone est choisi parmi les polymères de silicone ne contenant pas de groupes fonctionnels, les polymères de base présentant des groupes terminaux pouvant être condensés, les polymères de base présentant des groupes alkyle insaturés ainsi que les polymères de base contenant Si-H, Si-vinyle, phényle ou fluor.

3. Procédé selon l'une quelconque des revendications précédentes, dans lequel les compositions de silicone hautement visqueuses contiennent au moins 40% en poids d'organopolysiloxane.

4. Procédé selon l'une quelconque des revendications précédentes, dans lequel les compositions de silicone hautement visqueuses contiennent des charges.

5. Procédé selon l'une ou plusieurs des revendications précédentes, dans lequel la pression absolue dans l'évaporateur instantané est de 0,01 Pa à 500 Pa.

6. Procédé selon l'une ou plusieurs des revendications précédentes, dans lequel la température des polymères de silicone hautement visqueux ou des compositions de silicone hautement visqueuses dans l'évaporateur instantané est de 150°C à 240°C.

7. Procédé selon l'une ou plusieurs des revendications précédentes, dans lequel les polymères de silicone hautement visqueux ou les compositions de silicone hautement visqueuses sont chauffé(e)s avant l'injection dans l'évaporateur instantané.

8. Procédé selon l'une ou plusieurs des revendications précédentes, dans lequel les polymères de silicone hautement visqueux ou les compositions de silicone hautement visqueuses sont dégazé(e)s avant l'entrée dans l'évaporateur instantané.
